**Europäisches Patentamt**

**European Patent Office**

**Office européen des brevets**

(19)

(11) Veröffentlichungsnummer: **0 362 204 B1**

# (12) EUROPÄISCHE PATENTSCHRIFT

(45) Veröffentlichungstag der Patentschrift:
13.03.91 Patentblatt 91/11

(51) Int. Cl.⁵: **G06K 15/14, B41J 29/12**

(21) Anmeldenummer: **88902092.1**

(22) Anmeldetag: **04.03.88**

(86) Internationale Anmeldenummer:
**PCT/DE88/00117**

(87) Internationale Veröffentlichungsnummer:
**WO 89/02136 09.03.89 Gazette 89/06**

(54) **ABDECK- UND REINIGUNGSVORRICHTUNG FÜR DEN OPTISCHEN ZEICHENGENERATOR IN EINER ELEKTROFOTOGRAFISCHEN DRUCKEINRICHTUNG.**

(30) Priorität: **27.08.87 DE 3728663**

(43) Veröffentlichungstag der Anmeldung:
**11.04.90 Patentblatt 90/15**

(45) Bekanntmachung des Hinweises auf die
Patenterteilung:
**13.03.91 Patentblatt 91/11**

(84) Benannte Vertragsstaaten:
**DE FR GB IT NL SE**

(56) Entgegenhaltungen:
**WO-A-87/02162**

(56) Entgegenhaltungen:
**GB-A- 1 008 965**
**US-A- 3 710 099**
**US-A- 4 515 491**
**Patent Abstracts of Japan, Band 10, Nr. 218
(M-503) (2274), 30. Juli 1986& Japan, A,
6157368 (FUJITSU) 24. März 1986 siehe ganze
Zusammenfassung**

(73) Patentinhaber: **Siemens Aktiengesellschaft
Wittelsbacherplatz 2
W-8000 München 2 (DE)**

(72) Erfinder: **HICKISCH, Gerhard
Plievierpark 12
W-8000 München 83 (DE)**

## Beschreibung

Die Erfindung betrifft einen Zeichengenerator für eine nach dem Prinzip der Elektrofotografie arbeitende Druckeinrichtung.

Nach dem Prinzip der Elektrofotografie arbeitende Druckeinrichtungen enthalten optische Zeichengeneratoren. Diese optischen Zeichengeneratoren haben die Aufgabe, die in Form von elektronischen Daten vorliegende Druckinformtion in ein optisches Bild umzusetzen, mit dem dann eine fotoleitende Schicht z.B. eine Fotoleitertrommel belichtet wird. Danach wird das belichtete Bild in bekannter Weise entwickelt und z.B. auf Papier umgedruckt.

Der Lichtaustrittsbereich von derartigen optischen Zeichengeneratoren befindet sich in unmittelbarer Nähe der Fotoleitertrommel bzw. des Aufzeichnungsträgers.

Bei elektrofotografischen Druckeinrichtungen wird das über den optischen Zeichengenerator auf dem Aufzeichnungsträger (Fotoleitertrommel) erzeugte Ladungsbild mit Hilfe einer Entwicklereinrichtung eingefärbt, wobei Ein- oder Zweikomponentenentwickler (Toner) zur Anwendung kommen.

Beim Einsatz von optischen Zeichengeneratoren in elektrofotografischen Druckeinrichtungen besteht die Gefahr, daß der Lichtaustrittsbereich der Zeichengeneratoren durch Toner oder Staub verschmutzt wird, was die Zeichenerzeugung nachhaltig stört, weil sie die auftreffende Lichtleistung wesentlich vermindert.

Optische Zeichengeneratoren, die aus einer LED-Leiste mit zugeordneter Fokussiereinrichtung bestehen, sind aus der WO-A1-87/02162 bekannt.

Der bekannte Zeichengenerator für eine nach dem Prinzip der Elektrofotografie arbeitende Druckeinrichtung weist folgende Merkmale auf

– auf einem Trägerteil sind eine Vielzahl Leuchtelemente (LED) mit Lichtaustrittsbereichen an der Oberfläche des Zeichengenerators angeordnet,
– das auf Seite 9, zweiter Abschnitt beschriebene einzige überdeckende Fotoelement FE stellt eine Art Abdeckeinrichtung für den Lichtaustrittsbereich der Leuchtelemente aus dem Zeichengenerator dar,
– die Abdeckeinrichtung FE ist derart ausgebildet, daß sie in einem Abdeckzustand den Lichtaustrittsbereich abdeckt und in einem Betriebszustand den Lichtaustrittsbereich freigibt.

Hierbei dient die Abdeckeinrichtung FE aber nicht zur Verhinderung des Festsitzens von Schmutz und schon gar nicht als Reinigungsvorrichtung. Sie dient allein als Trägerelement für das Fotoelement FE.

Die US-A-4 515 491 zeigt eine bewegliche Abdeckvorrichtung mit Arbeits- und Ruhestellung bei einem Drucker, um das Eindringen von Schmutz in den Papierschlitz zu vermeiden.

Es handelt sich hierbei aber nicht um einen elektrofotografischen Drucker und die Abdeckvorrichtung überdeckt nicht den Lichtaustrittsbereich von Leuchtelementen.

Die GB-A-1 008 965 und die US-A-3 710 099 zeigen luftbetriebene Reinigungsvorrichtungen für den Lichtaustrittsbereich bei einer optischen Sortieranlage.

Es handelt sich hierbei nicht um einen Zeichengenerator und schon gar nicht um eine Mehrzweckeinrichtung zum Abdecken und Reinigen.

Die Patent Abstracts of Japan, Band 10, Nr. 318 (M-503) (2274), 30.Juli 1986 und JP-A-6 157 368 befaßt sich mit einer Filtereinrichtung zur Verhinderung des Eindringens von Schmutz in einen mechanischen Drucker, aber nicht mit einer Mehrzweckeinrichtung für einen Zeichengenerator gemäß Patentanspruch 1.

Aufgabe der Erfindung ist es deshalb, eine Einrichtung für einen Zeichengenerator einer elektrofotografischen Druckeinrichtung bereitzustellen, die es ermöglicht, den Lichtaustrittsbereich vor Ablagerungen von Schmutz zu schützen bzw. eine Einrichtung, die verhindert, daß sich Schmutz auf dem Lichtaustrittsbereich festsetzt.

Diese Aufgabe wird bei einem Zeichengenerator der eingangs genannten Art gemäß dem Patentanspruch 1 gelöst.

Vorteilhafte Ausführungsformen der Erfindung sind in den Unteransprüchen gekennzeichnet.

Die Abdeck- und Reinigungsvorrichtung deckt den Lichtaustrittsbereich des Zeichengenerators bei Druckerstillstand sowie bei Servicearbeiten ab und gibt ihn im Betriebszustand frei.

Damit ist ein ausreichender Schutz vor Beschädigung und vor Staubablagerung gewährleistet.

Weiterhin ist es in vorteilhafter Weise mit der Abdeck- und Reinigungsvorrichtung möglich, den Lichtaustrittsbereich zu reinigen. Dies kann entweder mechanisch geschehen, indem z.B. an einem verschwenkbaren Blendenelement eine Lippe oder ein anderes Abstreifelement angeordnet ist, das den Lichtaustrittsbereich des Zeichengenerators überstreicht oder in besonders vorteilhafter Weise dadurch, daß das Blendenelement zusammen mit dem Lichtaustrittsbereich eine Breitstrahldüse bildet, durch die gereinigte Luft geblasen wird. Der Luftstrom streift über die Optik des optischen Zeichengenerators und verhindert als Luftvorhang die Staubablagerung auf der Optik.

In vorteilhafter Weise wird dabei die gereinigte Luft durch einen Luftzufuhrkanal geführt, der im Lichtaustrittsbereich des Zeichengenerators mündet. Das Blendenelement verdichtet dabei den Luftstrom im Lichtaustrittsbereich, wobei der Luftstrom so verläuft, daß er zwar den Lichtaustrittsbereich erfaßt, den Schmutz jedoch nicht gegen die Fotoleitertrommel transportiert.

Das Blendenelement läßt sich in einfacher Weise von einem Elektromagneten über ein Gestänge steuern.

Bei einer weiteren vorteilhaften Ausführungsform der Erfindung ist das schwenkbare Blendenelement mit einem motorisch entlang des Zeichengenerators bewegbaren Schlitten gekoppelt. In einem ersten, der Reinigungs- oder Betriebsposition des Zeichengenerators zugeordneten Position des Schlittens gibt das Blendenelement den Lichtaustrittsbereich frei bzw. betätigt die Reinigungsvorrichtung. In einer zweiten, der Ruhelage des Zeichengenerators zugeordneten Position des Blendenelementes wird der Lichtaustrittsbereich abgedeckt.

Der Schlitten kann z.B. Teil einer Belichtungsenergie-Korrekturvorrichtung sein. Durch diese Koppelung der Belichtungsenergiekorrekturvorrichtung mit der Abdeck- und Reinigungsvorrichtung ist ein zusätzliches Antriebsorgan für die Abdeckung und Reinigungsvorrichtung unnötig. Die Koppelung gewährleistet außerdem eine hohe Betriebssicherheit.

Durch die Anordnung eines Betätigungsgestänges, das in den Verschiebebereich des Schlittens ragt und das mit einer Feder gekoppelt ist, wird der Aufbau der Abdeck- und Reinigungsvorrichtung und ihre Betätigung besonders einfach.

Eine Ausführungsform der Erfindung ist in den Zeichnungen dargestellt und wird im folgenden beispielsweise näher beschrieben. Es zeigt

FIG 1 eine schematische Schnittdarstellung der Abdeck- und Reinigungsvorrichtung in Abdeckposition

FIG 2 eine schematische Schnittdarstellung der Abdeck- und Reinigungsvorrichtung bei geöffnetem Lichtaustrittsbereich des optischen Zeichengenerators

FIG 3 eine schematische Darstellung der Betätigungsvorrichtung für die Abdeck- und Reinigungsvorrichtung und

FIG 4 eine schematische Darstellung eines Zeichengenerators, bei dem die Abdeck- und Reinigungsvorrichtung mit einer Belichtungsenergie-Korrektureinrichtung gekoppelt ist.

Eine hier nicht im einzelnen dargestellte elektrofotografische Druckeinrichtung enthält einen optischen Zeichengenerator. Dieser weist eine LED-Leiste auf, auf der einzeln ansteuerbare Dioden 1 angeordnet sind, deren Licht über eine Fokussieroptik 2 (Selfoc-Optik) auf eine Fotoleitertrommel 3 übertragen wird. Die LED-Leiste mit den Dioden 1 befindet sich dabei staubgeschützt innerhalb eines die Fokussieroptik tragenden Rahmenteiles 4 des Zeichengenerators und ist auf einem Trägerteil T des Zeichengenerators angeordnet. Das Trägerteil T führt dabei die bei der Aktivierung der Leuchtdioden 1 entstehende Wärme ab bzw. nimmt die elektrischen Zuleitungen auf. Der Lichtaustrittsbereich der Fokussieroptik 2 und damit der Dioden 1 (Leuchtelemente) befindet sich in unmittelbarer Nähe der Fotoleitertrommel 3 in dichtem Abstand. Die einzeln zeichenabhängig aktivierten Leuchtdioden 1 erzeugen dabei durch Belichtung in bekannter Weise auf der Oberfläche der Fotoleitertrommel 3, die z.B. auch ein Fotoleiterband sein kann, ein Ladungsbild, das dann anschließend in einer Entwicklerstation entwickelt, einer Umdruckstation auf Papier umgedruckt und in einer Fixierstation fixiert wird.

Zum Schutz vor Staubablagerungen auf dem Lichtaustrittsbereich der Optik 2 bzw. zum Schutz der Optik vor Tonerteilchen und gleichzeitig zur Reinigung des Lichtaustrittsbereiches der Optik ist ein länglich ausgebildetes Blendenelement 5 angeordnet. Dieses Blendenelement kann aus Plastik-Guß bestehen und ist über einen Rastansatz 6 an einem Betätigungshebel 7 eines Gestänges 8 befestigt. Das Abdeckelement 5, das sich über die gesamte Breite der LED-Leiste mit den Dioden 1 bzw. dem Lichtaustrittsbereich der Fokussieroptik 2 erstreckt, bildet den Abschluß eines Luftzuführungskanales 9. Ausgehend von einem Gebläse G wird diesem Luftzuführungskanal 9 über eine Filtereinrichtung F gereinigte Luft zugeführt. Diese gereinigte Luft kann jedoch auch über ein hier nicht dargestelltes Beipaßsystem aus der Kühlluft für den Zeichengenerator abgezweigt werden.

Das Abdeckelement läßt sich mit Hilfe des Gestänges 8 und einem daran gekoppelten Elektromagneten 10 abhängig vom Betriebszustand der Druckeinrichtung betätigen. Bei Servicearbeiten an der Fotoleitertrommel bzw. an dem Drucker und bei Druckerstillstand wird durch Ansteuerung des Elektromagneten 10 das Abdeckelement 5 entsprechend der Position 1 in den Lichtaustrittsbereich der Optik 2 verschoben, wobei es die Optik abdeckt und damit den optischen Zeichengenerator vor Beschädigung und vor Verschmutzung schützt.

Bei Druckerbetrieb wird das Betätigungselement 7 über das Gestänge 8 entgegen dem Uhrzeigersinn verschoben, dadurch hebt sich das einseitig in Ausnehmungen 11 des Gehäuses gelagerte Betätigungselement 5 im Bereich der Optik 2 an und gibt einen sich über die Breite der Optik 2 erstreckenden Spalt 12 frei. Gleichzeitig wird über ein Gebläse und einen Luftzuführungskanal 9 gereinigte Luft zugeführt, die in verdichteter Form den Lichtaustrittsbereich der Optik 2 überstreicht und als Luftvorhang 12 Staubablagerungen auf der Optik 2 verhindert bzw. diese von Staubablagerungen befreit.

Anstelle von Blasluft zum Reinigen des Lichtaustrittsbereiches der Optik ist es bei einer hier nicht dargestellten Ausführungsform auch denkbar, auf dem die Optik überstreichenden Bereich der Abdeckelemente 5 eine weiche Gummilippe oder ein Schaumstoffstück anzuordnen, das zum Reinigen den Lichtaustrittsbereich überstreicht bzw. in einer Abdeckposition diesen abdeckt.

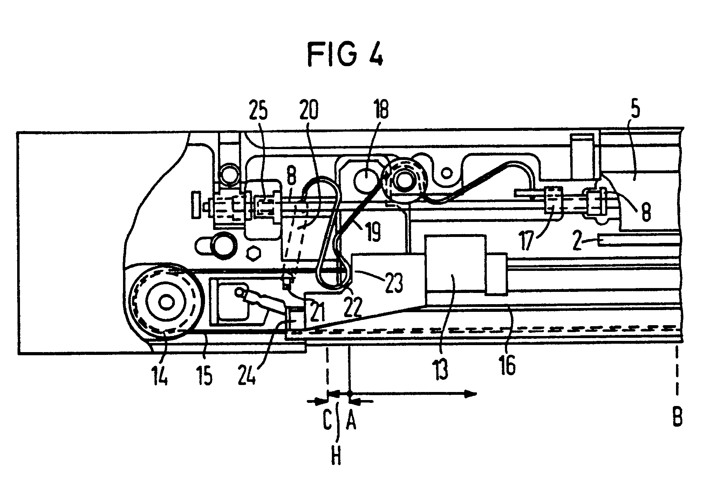

Bei einer weiteren in der Fig. 4 dargestellten Ausführungsform ist der Zeichengenerator prinzipiell entsprechend der WO87/02162 aufgebaut und enthält eine entsprechende Belichtungsenergie-Korrektureinrichtung.

Diese Belichtungskorrektureinrichtung weist einen Schlitten 13 auf, der mit Hilfe eines Motors 14 und einem Zahnriemen 15 entlang einer Führungsschiene 16 über den Zeichengenerator bewegt wird. Dabei überstreicht der Schlitten 13 während einer Abgleichroutine den Lichtaustrittsbereich (Selfoc-Optik 2) des Zeichengenerators. Der Schlitten enthält hier nicht dargestellt entsprechende Fotoelemente zum Abtasten des Lichtes am Lichtaustrittsbereich der Selfoc-Optik 2.

Mit dem Gestänge 8 ist über einen Ansatz 17 ein um einen Drehpunkt 18 verschwenkbares Betätigungsgestänge 19 gekoppelt. Mit seinem anderen Ende ist das Betätigungsgestänge 19 über eine Feder 20 an einem Ansatz 21 des Zeichengenerators befestigt. Ein Betätigungsteil 22 des Gestänges 19 ragt in den Verschiebebereich des Schlittens 13 und wirkt mit einer Befestigungsfläche 23 des Schlittens 13 zusammen.

Während des Druckens der elektrofotografischen Druckeinrichtung, d.h. in der Betriebsposition des Zeichengenerators befindet sich der Schlitten 13 in der dargestellten Position A (mit ausgezogenen Linien dargestellt). Diese Position wird durch einen Magneten 24 am Schlitten 13 in Verbindung mit einem darüber ortsfest angeordneten hier nicht dargestellten Hallsensor erkannt und von der Druckersteuerung umfaßt. Im Reinigungs- und Betriebsfall des Zeichengenerators wird diese Position A angesteuert. Sowohl beim Reinigen als auch im Betrieb des Druckers befindet sich das Blendenelement 5 in einer die Optik 2 freigebenden, d.h. zurückgezogenen Position.

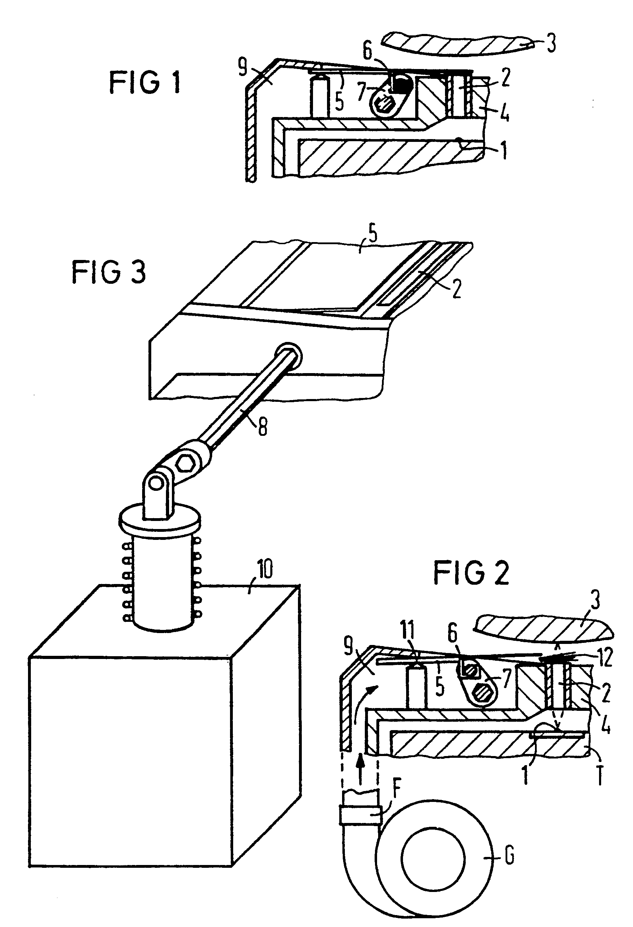

Zum Reinigen wird wie bei der Ausführungsform entsprechend der Fig. 2 und 3 Luft über die Lichtaustrittsbereiche der Optik 2 geblasen.

Im Betriebszustand des Zeichengeneratores und beim Reinigen zieht die Feder 20 über das Gestänge 19 das Blendenelement 5 in die geöffnete Position. Das Gestänge 19 besteht in dem dargestellten Ausführungsbeispiel aus einem einstückig ausgebildeten Stahlband.

Wird der Schlitten zum Abgleich in Pfeilrichtung in die Position B bewegt, wird diese geöffnete Position des Blendenelementes 5 über die Feder 20 beibehalten.

In Ruheposition des Zeichengenerators und beim Abschalten der Druckeinrichtung führt der Schlitten 13 in die Position C. Der Schlitten 13 legt sich dabei mit seiner Betätigungsfläche 23 an den Betätigungsteil 22 des Gestänges 19 an und bewegt diesen entgegen der Federkraft, der Feder 20, um einen Hub H über die Position A hinaus. Dadurch dreht das Betätigungsgestänge 19 über den Ansatz 17 das Blendenelement 5 in eine geschlossene Position, in der es den Lichtaustrittsbereich der Optik 2 abdeckt. Die Bewegung wird von einem am Gestänge 8 angeordneten Magneten 25 mit zugeordnetem Hallsensor am Zeichengenerator von der Druckersteuerung überwacht.

Bei Druckbereitschaft wird der Schlitten 13 wieder über die Druckersteuerung in die Position A gefahren.

Wird ein Abgleichvorgang der Leuchtelemente 1 des Zeichengenerators aufgerufen, so bewegt sich der Schlitten 13 mit gleichförmiger Geschwindigkeit über den Lichtaustrittsbereich der Optik 2.

Das Gestänge 19 und davon insbesondere der Betätigungsteil 22 ist in seiner Form so gestaltet, daß er mechanische Toleranzen und Anfahrungenauigkeiten ausgleichen kann.

## Ansprüche

1. Zeichengenerator für eine nach dem Prinzip der Elektrofotografie arbeitende Druckeinrichtung mit folgenden Merkmalen
   a) auf einem Trägerteil (T) sind eine Vielzahl Leuchtelemente (1) mit Lichtaustrittsbereichen an der Oberfläche des Zeichengenerators angeordnet,
   b) es ist eine Abdeck- und Reinigungsvorrichtung (5, 12) für den Lichtaustrittsbereich der Leuchtelemente (1) aus dem Zeichengenerator vorgesehen und
   c) die Abdeck- und Reinigungsvorrichtung ist derart ausgebilder, daß sie in einem Ruhezustand (Abdeckzustand) (C) den Lichtausittsbereich zur Verhinderung des Eindringens von Schmutz abdeckt und in einem Betriebszustand (A, B) den Lichtaustrittsbereich freigibt und/ oder bedarfsweise reinigt.

2. Zeichengenerator nach Anspruch 1, **dadurch gekennzeichnet**, daß die Abdeck- und Reinigungsvorrichtung ein verschwenkbares Blendenelement (5) aufweist.

3. Zeichengenerator nach einem der Ansprüche 1 oder 2, **dadurch gekennzeichnet**, daß die Abdeck- und Reinigungsvorrichtung beim Reinigen des Lichtaustrittsbereiches und/oder im Betriebszustand des Zeichengenerators einen Luftstrom (12) auf den Lichtaustrittsbereich lenkt.

4. Zeichengenerator nach Anspruch 3, **dadurch gekennzeichnet**, daß ein Luftzufuhrkanal (9) vorgesehen ist, der in den Lichtaustrittsbereich des Zeichengenerators mündet, wobei das Blendenelement (5) den Luftstrom (12) in der Art einer Breitstrahldüse über den Lichtaustrittsbereich verdichtet.

5. Zeichengenerator nach Anspruch 4, **dadurch gekennzeichnet,** daß dem Luftzufuhrkanal (9) gereinigte Luft zugeführt wird.

6. Zeichengenerator nach einem der Ansprüche 2 bis 4, **dadurch gekennzeichnet,** daß das Blendenelement (5) über ein Gestänge (8) mit einem magnetischen Betätigungselement (10) verbunden ist.

7. Zeichengenerator nach einem der Ansprüche 2 bis 5, **dadurch gekennzeichnet,** daß das schwenkbare Blendenelement (5) mit einem motorisch entlang des Zeichengenerators bewegbaren Schlitten (13) derart gekoppelt ist, daß in einem ersten der Reinigungs- und/oder Betriebslage des Zeichengenerators zugeordneten Position (A, B) des Schlittens (13) das Blendenelement (5) den Luftaustrittsbereich freigibt, und/oder die Reinigungsvorrichtung betätigt und daß in einer zweiten, der Ruhelage des Zeichengenerators zugeordneten Position (C) das Blendenelement (5) den Lichtaustrittsbereich abdeckt.

8. Zeichengenerator nach Anspruch 7, **gekennzeichnet** durch ein mit der Blende gekoppeltes Betätigungsgestänge (19) das in einen Verschiebebereich des Schlittens (13) ragt, wobei in der ersten Position (A, B) des Schlittens (13) das Betätigungsgestänge (19) das Blendenelement (5) über eine Feder (20) in eine den Lichtaustrittsbereich freigebende Position verschwenkt und daß durch Weiterbewegen des Schlittens (13) in die zweite Position (C) der Schlitten (13) über das Betätigungsgestänge (19) das Blendenelement (5) zurückschwenkt.

## Claims

1. Character generator for a printing device operating according to the principle of electrophotography having the following features
   a) a multiplicity of light elements (1) with light exit regions on the surface of the character generator are arranged on a carrier component (T),
   b) a covering and cleaning device (5, 12) for the light exit region of the light elements (1) out of the character generator is provided and
   c) the covering and cleaning device is designed in such a way that, in its state of rest (covering state) (C), it covers the light exit region in order to prevent the ingress of dirt and, in its operating state (A, B), releases and/or cleans the light exit region as required.

2. Character generator according to Claim 1, characterized in that the covering and cleaning device has a swivellable shutter element (5).

3. Character generator according to one of Claims 1 or 2, characterized in that, when cleaning the light exit region and/or in the operating state of the character generator, the covering and cleaning device deflects an air current (12) on to the light exit region.

4. Character generator according to Claim 3, characterized in that an air supply channel (9) is provided which opens out into the light exit region of the character generator, the shutter element (5) compressing the air current (12) in the manner of a wide-angle nozzle over the light exit region.

5. Character generator according to Claim 4, characterized in that cleaned air is fed to the air supply channel (9).

6. Character generator according to one of Claims 2 to 4, characterized in that the shutter element (5) is connected to a magnetic actuation element (10) via a linkage (8).

7. Character generator according to one of Claims 2 to 5, characterized in that the swivellable shutter element (5) is coupled to a slide (13), which can be moved, motor-driven, along the character generator, in such a way that, in a first position (A, B) assigned to the cleaning and/or operating position of the character generator of the slide (13), the shutter element (5) releases the air exit region and/or actuates the cleaning device, and in that, in a second position (C) assigned to the state of rest of the character generator, the shutter element (5) covers the light exit region.

8. Character generator according to Claim 7, characterized by an actuation linkage (19) coupled to the shutter, said linkage projecting into a displacement region of the slide (13), in which case, in the first position (A, B) of the slide (13), the actuation linkage (19) swivels the shutter element (5) via a spring (20) into a position which releases the light exit region, and in that, by means of continued movement of the slide (13) into the second position (C), the slide (13) swivels back the shutter element (5) via the actuation linkage (19).

## Revendications

1. Générateur de caractères pour un dispositif d'impression opérant selon le principe de l'électrophotographie, présentant les caractéristiques suivantes :
   a) une multiplicité d'éléments luminescents (1) possédant des zones de sortie de la lumière au niveau de la surface du générateur de caractères, est disposée sur un élément de support (T),
   b) il est prévu un dispositif de masquage et de nettoyage (5, 12) pour la zone de sortie de la lumière des éléments luminescents (1) hors du générateur de caractères, et
   c) le dispositif de masquage et de nettoyage est agencé de telle sorte que, dans un état de repos (état de masquage) (C), il recouvre la zone de sortie de la lumière pour empêcher la pénétration de poussières et dans un état de fonctionnement (A, B), il libère la zone de sortie de la lumière et/ou la nettoie le cas échéant.

2. Générateur de caractères suivant la revendication 1, caractérisé par le fait que le dispositif de masquage et de nettoyage comporte un élément formant obturateur pivotant (5).

3. Générateur de caractères suivant l'une des revendications 1 ou 2, caractérisé par le fait que lors du nettoyage de la zone de sortie de la lumière et/ou lorsque le générateur de caractères fonctionne, le dispositif de masquage et de nettoyage dirige un courant d'air (12) sur la zone de sortie de la lumière.

4. Générateur de caractères suivant la revendication 3, caractérisé par le fait qu'il est prévu un canal d'amenée d'air (9), qui débouche dans la zone de sortie de la lumière du générateur de caractères, l'élément formant obturateur (5) réalisant une densification du courant d'air (12) à la manière d'une buse de projection large, sur la zone de sortie de la lumière.

5. Générateur de caractères suivant la revendication 4, caractérisé par le fait que de l'air filtré est envoyé au canal d'amenée d'air (9).

6. Générateur de caractères suivant l'une des revendications 2 à 4, caractérisé par le fait que l'élément formant obturateur (5) est relié par l'intermédiaire d'une tringlerie (8) à un élément magnétique d'actionnement (10).

7. Générateur de caractères suivant l'une des revendications 2 à 5, caractérisé par le fait que l'élément formant obturateur pivotant (5) est accouplé à un chariot (13) déplaçable au moyen d'un moteur le long du générateur de caractàres, de sorte que, lorsque le chariot (13) est dans une première position (A, B) associée à la position de nettoyage et/ou de fonctionnement du générateur de caractères, l'élément formant obturateur (5) dégage la zone de sortie de l'air, et/ou actionne le dispositif de nettoyage, et que dans une seconde position (C) associée à la position de repos du générateur de caractères, l'élément formant obturateur (5) masque la zone de sortie de la lumière.

8. Générateur de caractères suivant la revendication 7, caractérisé par une tige d'actionnement (19), qui est accouplée à l'obturateur et qui pénètre dans une zone de déplacement du chariot (13), auquel cas, lorsque le chariot (13) est dans la première position (A, B), la tringlerie d'actionnement (19) fait pivoter l'élément formant obturateur (5) par l'intermédiaire d'un ressort (20) dans une position dégageant la zone de sortie de la lumière, et que, lors de la poursuite du déplacement du chariot (13), amenant ce dernier dans la seconde position (C), le chariot (13) fait pivoter en retour l'élément formant obturateur (5) par l'intermédiaire de la tringlerie d'actionnement (19).

FIG 1

FIG 3

FIG 2

# FIG 4